# FASCICULE DE BREVET EUROPEEN

(11) **EP 1 973 663 B1**
(45) Date de publication et mention de la délivrance du brevet: **24.06.2009**
(21) Numéro de dépôt: 07712642.3
(22) Date de dépôt: 04.01.2007
(51) Int. Cl.: B01L 3/02, G01N 35/10, G01N 1/38, F04B 9/02, F04B 53/16

(54) **DISPOSITIF DE POMPAGE**
PUMPVORRICHTUNG
PUMPING DEVICE

(30) Priorité: 11.01.2006 FR 0600318
(43) Date de publication de la demande: 01.10.2008
(73) Titulaire: Pulssar Technologies, 92230 Gennevilliers (FR)
(72) Inventeur: ABOUSALEH, Khaled, 75011 Paris (FR)
(74) Mandataire: de Saint-Palais, Arnaud Marie
(86) Numéro de dépôt international: PCT/FR2007/000018
(87) Numéro de publication internationale: WO 2007/080300

(56) Documents cités:
- FR-A- 2 096 275
- FR-A- 2 815 719
- GB-A- 2 055 986
- GB-A- 2 126 117
- US-A- 3 963 148

## Description

La présente invention concerne un dispositif de pompage pour de nombreux types de prélèvements. Elle s'applique plus particulièrement, mais non exclusivement, pour le pipetage, la dilution, le rinçage et/ou la distribution d'échantillons, c'est-à-dire quelles que soient les tranches de volume envisagées.

D'une manière générale, on sait qu'il a déjà été proposé de nombreux dispositifs permettant d'exécuter des cycles de pipetage et de rinçage, notamment au sein d'un dispositif d'analyse automatique.

Par le brevet FR 2 815 719, on connaît un dispositif de pipetage faisant intervenir au moins deux chambres de travail, l'une de faible volume pour prélever des échantillons, l'autre de volume supérieur pour effectuer des rinçages.

En effet, pour réaliser différentes opérations de prélèvements avec une précision satisfaisante, ce dispositif nécessite le recours a deux chambres de travail de volume différent.

Par ailleurs, un tel dispositif est destiné à être intégré dans un automate d'analyse d'un type particulier. Il n'est donc pas conçu pour équiper des appareils de types différents ou même pour être utilisé dans un montage de laboratoire.

Or, dans ce dernier type d'application, il est souhaitable que les appareils utilisés soient relativement autonomes et soient logés dans des boîtiers étant de préférence blindés de manière à s'affranchir des influences extérieures par exemple de nature électromagnétique, voire même de rayonnements ionisants.

Ces appareils doivent permettre la réalisation de connexions rapides de conduits d'admission et/ou de refoulement ainsi qu'une visualisation complète du circuit hydraulique de manière à pouvoir vérifier le bon fonctionnement de l'ensemble et de détecter éventuellement la présence d'une bulle de gaz ou d'une impureté.

Bien entendu, un tel appareil doit répondre à des critères de compacité de plus en plus strictes.

L'invention a donc tout d'abord pour but la réalisation d'un dispositif de pompage de structure simple n'utilisant qu'une seule motorisation et qu'une seule chambre de travail, offrant un accès facilité, une disposition compacte et un contrôle des circuits hydrauliques y compris de la pompe.

En vue de parvenir à ces résultats, le dispositif de pompage selon l'invention comprend :
- un boîtier dont la face avant est au moins partiellement constituée par un bloc en matière transparente qui s'étend partiellement à l'intérieur du boîtier, ce bloc étant muni de perçages usinés dont au moins un perçage borgne constituant une chambre de travail, au moins un perçage constituant un canal d'admission et/ou d'échappement qui débouche dans le perçage borgne au niveau de la face postérieure du bloc, deux canaux traversants débouchant chacun sur la face antérieure et sur la face postérieure du bloc, des orifices de ces deux canaux traversants situés au niveau de la face antérieure du bloc étant équipés de moyens de connexion de conduits hydrauliques,
- deux électrovannes fixées sur la face postérieure du bloc, chacune de ces électrovannes étant connectée d'une part au canal d'admission et/ou d'échappement et, d'autre part à l'un correspondant desdits canaux traversants,
- un plongeur monté coulissant, avec étanchéité dans un palier équipant l'orifice du perçage borgne, ce plongeur délimitant avec ledit perçage borgne un volume variant en fonction de la position axiale du plongeur,
- un module d'entraînement en translation du plongeur connecté au niveau de la base du plongeur.

Bien entendu, le palier pourra être conformé pour assurer une étanchéité entre la chambre de travail, le plongeur et le reste du dispositif de pompage.

Ledit palier pourra comprendre par exemple un joint torique ou une couronne à double paroi comportant des joints d'étanchéité interne et externe et une embase avec des moyens de fixation au bloc.

Le dispositif selon l'invention pourra comprendre deux perçages constituant respectivement un canal d'admission et un canal d'échappement qui débouchent dans le perçage borgne au niveau de la face postérieure du bloc et sont directement raccordés chacun à une desdites électrovannes.

Ledit module d'entraînement pourra s'étendre sous le bloc et les électrovannes et latéralement par rapport à ces dernières de façon à être le plus compact possible.

Ledit module d'entraînement pourra comprendre un chariot d'entraînement connecté au plongeur et entraîné en translation au moyen d'une crémaillère engrenant avec un pignon mu par une motorisation telle qu'un moteur pas à pas.

En variante, ce chariot d'entraînement pourra être entraîné en translation au moyen d'une vis sans fin elle-même entraînée en translation par une motorisation comprenant un stator et un rotor annulaire dont la surface intérieure présente un taraudage dans lequel s'engage la vis. Avantageusement, cette variante pourra permettre d'obtenir un dispositif encore plus compact.

Ladite motorisation pourra être apte à entraîner en translation ledit chariot d'entraînement avec une précision correspondant à un incrément défini par l'ensemble chariot d'entraînement/motorisation.

Lesdits conduits hydrauliques pourront comprendre par exemple des moyens de pipetage, une réserve de liquide.

Les canaux traversants pourront être des canaux d'admission et/ou d'échappement.

Bien entendu, la partie transparente de la face antérieure du bloc se situe au moins au niveau de la chambre de travail.

Ainsi, la transparence de la face avant permet de vérifier le bon fonctionnement du dispositif de pompage notamment l'existence de bulles d'air non souhaitées ou d'impuretés au niveau des canaux traversants et de la chambre de travail.

Selon un premier avantage, le dispositif selon l'invention pourra être dimensionné de manière à pouvoir être compatible avec les automates d'analyse actuellement utilisés mais il pourra également être utilisé de manière ponctuelle comme matériel volant pour différentes opérations de pompage par exemple dans un laboratoire et, ce, sans être intégré dans un dispositif d'analyse spécifique.

Une telle utilisation est simplifiée par l'emplacement sur la face avant du boîtier des orifices d'accès aux canaux traversants.

Selon un deuxième avantage, l'ensemble plongeur/palier pourra être interchangeable de manière à faire varier le diamètre du plongeur. En effet, la variation du volume de la chambre de travail est fonction de la position axiale du plongeur mais également du diamètre du plongeur ce qui permet de changer de gamme de volume.

Le boîtier pourra comprendre une partie amovible, par exemple sa face inférieure, pour permettre le changement de l'ensemble plongeur/palier.

Ainsi, on augmente la précision du volume pompé par un réglage inférieur à un incrément.

En effet, la variation et notamment la diminution du diamètre du plongeur sont un élément de réglage supplémentaire.

Par exemple, si on divise par deux le diamètre du plongeur, on augmente par quatre la précision du dispositif c'est-à-dire on divise par quatre l'incrément initial imposé par la motorisation ou autrement dit on diminue l'incrément initial dans le rapport du carré des diamètres du plongeur.

Ainsi, le changement de plongeur et de palier permet de toujours avoir une gamme de volume assortie d'une précision ad hoc adaptée au volume de liquide à pomper.

Les électrovannes pourront être des électrovannes deux voies.

Lesdites électrovannes et ladite motorisation pourront être commandées par un processeur recevant des informations relatives à la position du plongeur.

Les susdites informations pourront être obtenues au moyen d'une fourche optique associée audit module d'entraînement.

Bien entendu, le dispositif selon l'invention pourra en outre comprendre des moyens de commande du module d'entraînement et des électrovannes conçues de manière à assurer un cycle comprenant au moins :
- une phase d'admission dans laquelle la première électrovanne est ouverte, la deuxième électrovanne est fermée et le module d'entraînement engendre une translation du plongeur de manière à accroître le volume de la chambre de travail, l'accroissement de volume de la chambre provoquant l'aspiration d'un liquide par exemple dans des moyens de pipetage connectés à un premier canal traversant,
- une phase d'échappement dans laquelle, la première électrovanne est fermée, la deuxième électrovanne est ouverte, le module d'entraînement agissant alors de manière à provoquer une réduction du volume de ladite chambre de travail et un refoulement du liquide aspiré à travers un deuxième canal traversant.

Selon une variante, le dispositif selon l'invention pourra en outre comprendre des moyens de commande du module d'entraînement et des électrovannes conçus de manière à assurer un fonctionnement en mode de dérivation où les deux électrovannes sont ouvertes.

Enfin, la structure du boîtier du dispositif selon l'invention pourra constituer un double blindage électromagnétique. En effet, elle permet non seulement de s'affranchir des influences de nature électromagnétique extérieures au boîtier mais elle permet également d'éviter de perturber les mesures à l'extérieur du boîtier par l'apparition de perturbations électromagnétiques dues à la motorisation et aux électrovannes du dispositif selon l'invention.

Des modes d'exécution de l'invention seront décrits ci-après, à titre d'exemples non limitatifs, avec référence aux dessins annexés dans lesquels :
La figure 1 est une représentation en perspective d'un dispositif selon l'invention ;
La figure 2 est une vue de côté du dispositif de la figure 1 ;

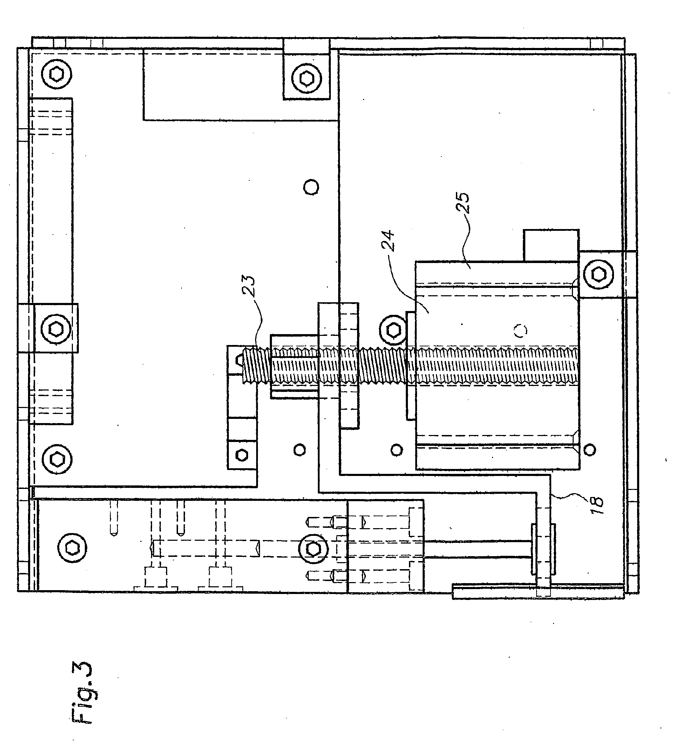

La figure 3 est une vue en coupe d'un deuxième dispositif selon l'invention ;
La figure 4 est une représentation en coupe du perçage borgne et du plongeur d'un dispositif selon l'invention avec un deuxième type de palier interchangeable ;
La figure 5 est une représentation en coupe du perçage borgne et du plongeur d'un dispositif selon l'invention avec un troisième type de palier interchangeable ;
Les figures 6a, 6b et 6c sont des représentations de la circulation fluidique dans un dispositif selon l'invention.

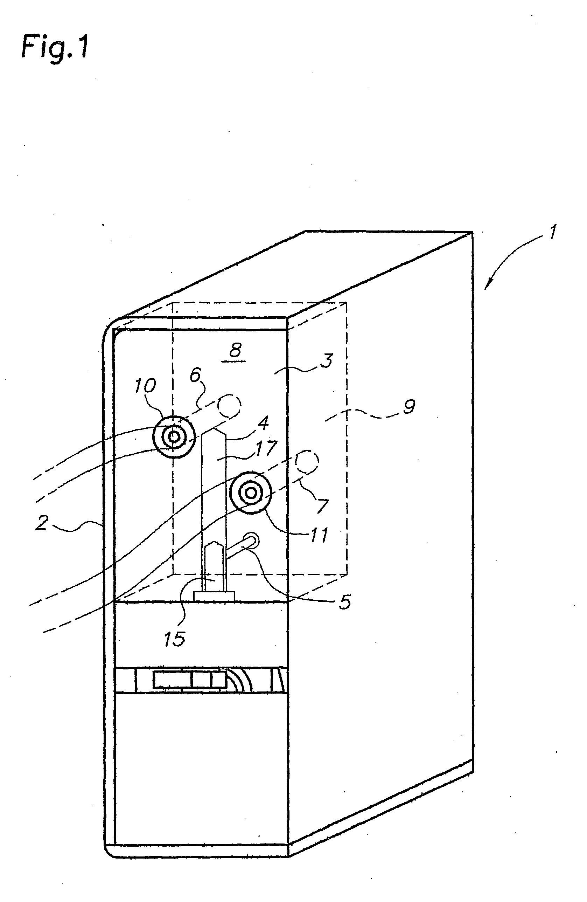

Dans l'exemple représenté sur la figure 1, le dispositif de pompage comprend :
- un boîtier 1 dont la partie supérieure de la face avant 2 est constituée par un bloc 3 en matière transparente qui s'étend partiellement à l'intérieur du boîtier 1 ; ce bloc 3 est muni de perçages usinés dont un perçage borgne 4, un perçage constituant un canal d'admission et/ou d'échappement 5 qui débouche dans le perçage borgne 4 au niveau de la face postérieure du bloc, deux canaux traversants 6, 7 débouchant chacun sur la face antérieure 8 et sur la face postérieure 9 du bloc 3, des orifices 10, 11 de ces deux canaux traversants 6, 7 situés au niveau de la face antérieure 8 du bloc 3 étant équipés de moyens de connexion de conduits hydrauliques,
- deux électrovannes deux voies 12, 13 fixées sur la face postérieure 9 du bloc 3 par l'intermédiaire d'une pièce de liaison 14 s'étendant contre la face postérieure 9 du bloc 3, chacune de ces électrovannes étant connectée d'une part au canal d'admission et/ou d'échappement 5 et, d'autre part respectivement à un desdits canaux traversants 6, 7,
- un plongeur 15 monté coulissant, avec étanchéité dans un palier 16, équipant l'orifice du perçage borgne 4, ce plongeur 15 délimitant avec ledit perçage borgne 4 une chambre de travail 17 dont le volume varie en fonction de la position axiale du plongeur 15,
- un module d'entraînement en translation du plongeur, ce module comprenant un chariot d'entraînement 18 connecté au niveau de la base du plongeur 15 et entraîné en translation au moyen d'une crémaillère 19 engrenant avec un pignon 20 mu par un moteur pas à pas 21.

Les extrémités supérieures du perçage borgne 4 et du plongeur 15 sont coniques en correspondance de forme.

Ledit palier 16 est en forme de couronne présentant une section en forme de L inséré dans l'orifice du perçage borgne 4.

Il est à noter que le palier pourra également présenter une section carrée ou rectangulaire ou autre s'insérant éventuellement au moins partiellement dans l'orifice du perçage borgne 4 et comprendre sur sa partie supérieure un joint torique qui est comprimé dans un alésage situé au niveau de l'orifice du perçage borgne 4 afin de créer l'étanchéité requise entre la chambre de travail 17, le plongeur 15 et le reste du dispositif.

Il est également à noter que le plongeur 15 et le palier 16 pourront être interchangeables. A cet effet, une partie de la face inférieure du boîtier pourra être amovible afin de pouvoir changer ledit plongeur et ledit palier et les remplacer par un ensemble palier/plongeur de diamètre supérieur ou inférieur.

Le diamètre extérieur du palier est constant et le diamètre interne du palier est égal au diamètre externe du plongeur.

L'électrovanne 12 située au-dessus est en position horizontale, l'électrovanne 13 située au-dessous est en position verticale afin de dégager un espace latéral à côté de l'électrovanne 13 derrière le bloc 3 pour la crémaillère 19.

Selon une variante, la pièce de liaison 14 ne s'étendant pas sur toute la largeur du bloc, ledit espace latéral pourra être situé au moins en partie à côté de ladite pièce de liaison.

La commande des électrovannes 12, 13 et du moteur 21 est assurée par un microcontrôleur 22 situé dans la partie arrière du boîtier.

Un capteur optique fournit seulement la position "zéro" du système.

Dans cet exemple, l'état de la vanne 12 est toujours à l'opposé de celui de la vanne 13, c'est-à-dire que lorsque la vanne 12 est ouverte, la vanne 13 est fermée et inversement.

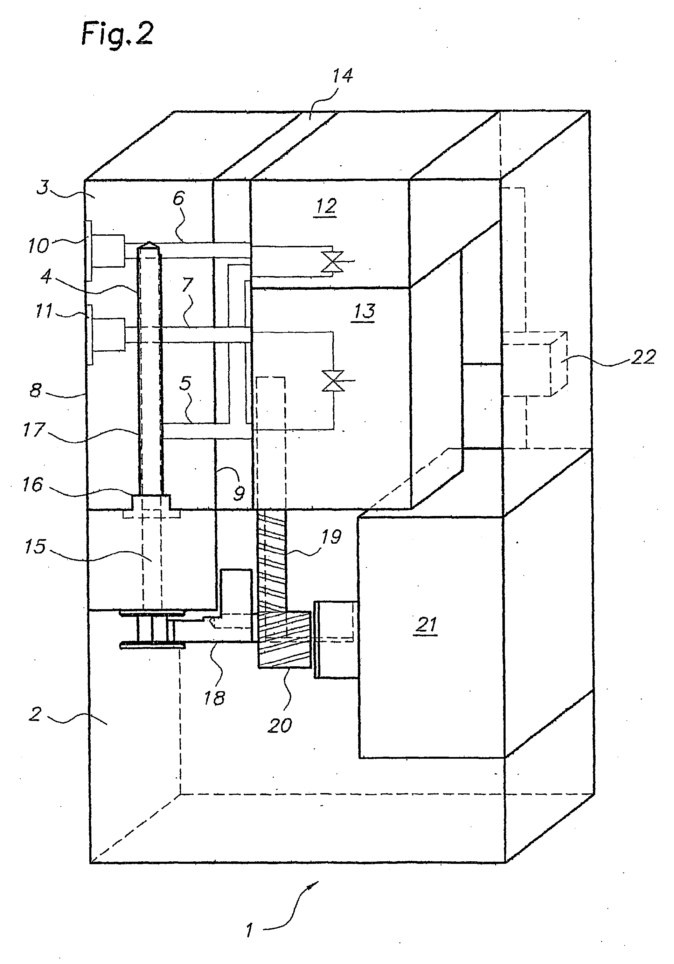

D'autres mécanismes d'entraînement en translation du plongeur peuvent être envisagés tels qu'une vis sans fin 23 axée verticalement et mue par un rotor creux fileté 24 logé dans un stator 25. Ladite vis est située dans l'espace latéral situé à côté de l'électrovanne verticale comme dans le dispositif de la figure 2.

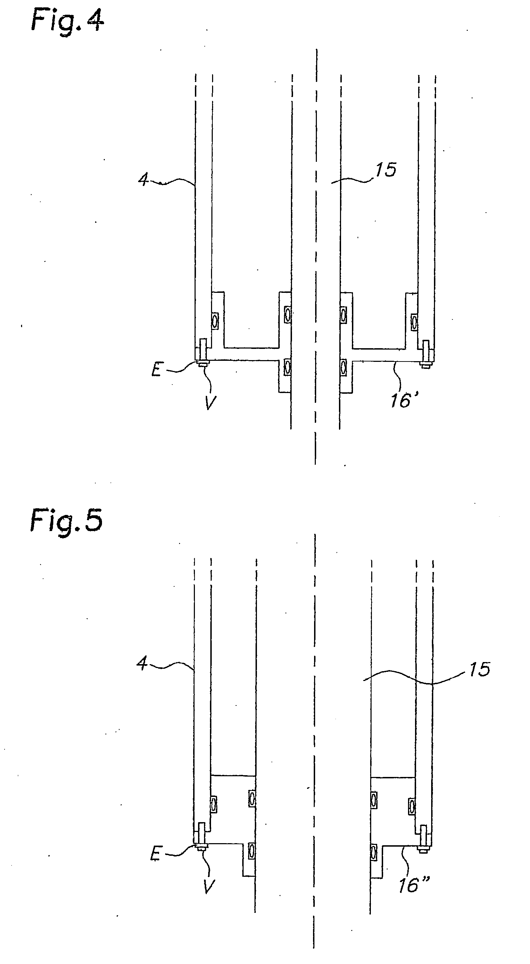

Les figures 4 et 5 représentent des variantes d'un palier interchangeable 16' et 16" comprenant une couronne à double paroi comportant des joints d'étanchéité interne et externe et une embase permettant sa fixation sur le bloc par exemple au moyen d'un ensemble vis V/écrou E.

Il est à noter qu'au niveau du passage du plongeur, le palier pourra comporter des dents de façon à réduire les frottements du plongeur sur le palier tout en conservant une étanchéité.

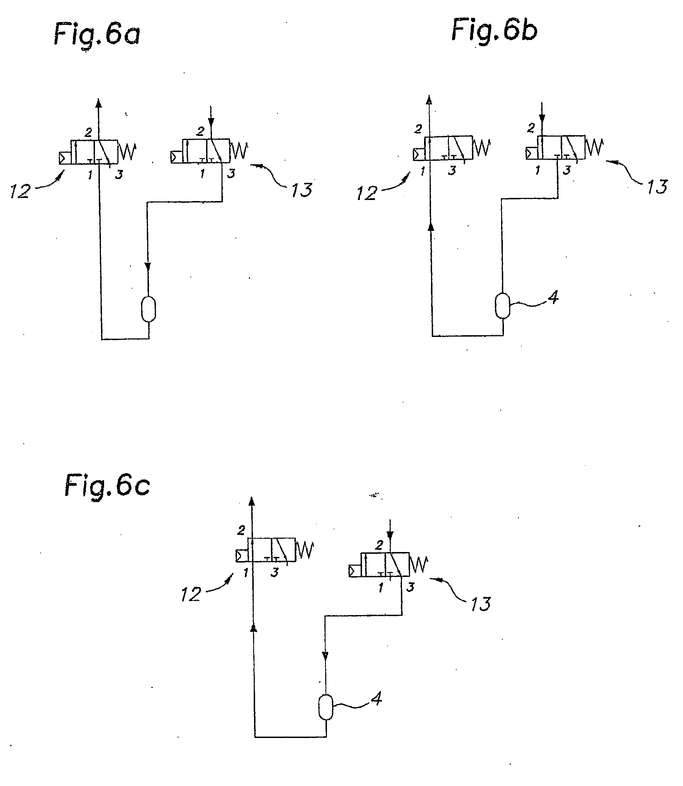

Un dispositif selon l'invention pourra fonctionner selon un des modes suivants :
- un mode d'aspiration où l'électrovanne 13 est ouverte et l'électrovanne 12 fermée (Figure 6a), et le module d'entraînement engendre une translation du plongeur de manière à accroître le volume de la chambre de travail, l'accroissement de volume de la chambre provoquant l'aspiration d'un liquide par exemple dans des moyens de pipetage connectés au canal traversant d'admission 7 par l'orifice 11,
- un mode d'échappement où l'électrovanne 13 est fermée et l'électrovanne 12 ouverte (Figure 6b), le module d'entraînement agissant alors de manière à provoquer une réduction du volume de ladite chambre de travail et un refoulement du liquide aspiré à travers le canal d'échappement 6 par l'orifice 10,
- un mode de dérivation où les deux électrovannes 12 et 13 sont ouvertes (Figure 6c).

Le dispositif selon l'invention pourra être utilisé pour des applications nécessitant une grande précision par exemple dans une plage variant de 3 µL à 5,0 mL.

La résolution est d'environ 4500 incréments en mode standard et de 36000 incréments en mode microstepping pour un mouvement de plongeur de 30 mm.

## Revendications

1. Dispositif de pompage, comprenant :
- un boîtier (1) dont la face avant (2) est au moins partiellement constituée par un bloc (3) en matière transparente qui s'étend partiellement à l'intérieur du boîtier (1), ce bloc (3) étant muni de perçages usinés dont au moins un perçage borgne (4) constituant une chambre de travail (17), au moins un perçage constituant un canal d'admission et/ou d'échappement (5) qui débouche dans le perçage borgne (4) au niveau de la face postérieure du bloc (3), deux canaux traversants (6, 7) débouchant chacun sur la face antérieure (8) et sur la face postérieure (9) du bloc (3), des orifices (10, 11) de ces deux canaux traversants (6, 7) situés au niveau de la face antérieure (8) du bloc (3) étant équipés de moyens de connexion de conduits hydrauliques,
- deux électrovannes (12, 13) fixées sur la face postérieure (9) du bloc (3), chacune de ces électrovannes (12, 13) étant connectée d'une part au canal d'admission et/ou d'échappement (5) et, d'autre part à l'un correspondant desdits canaux traversants (6, 7),
- un plongeur (15) monté coulissant, avec étanchéité dans un palier (16) équipant l'orifice du perçage borgne (4), ce plongeur (15) délimitant avec ledit perçage borgne (4) un volume variant en fonction de la position axiale du plongeur (15),
- un module d'entraînement en translation du plongeur (15) connecté au niveau de la base du plongeur.

2. Dispositif selon la revendication 1,
**caractérisé en ce qu'**il comprend deux perçages constituant respectivement un canal d'admission et un canal d'échappement qui débouchent dans le perçage borgne au niveau de la face postérieure du bloc et sont directement raccordés chacun à une desdites électrovannes.

3. Dispositif selon la revendication 1,
**caractérisé en ce que** ledit module d'entraînement s'étend sous le bloc (3) et les électrovannes (12, 13) et latéralement par rapport à ces dernières de façon à être le plus compact possible.

4. Dispositif selon la revendication 1,
**caractérisé en ce que** ledit module d'entraînement comprend un chariot d'entraînement (18) connecté au plongeur (15) et entraîné en translation au moyen d'une crémaillère (19) engrenant avec un pignon (20) mu par une motorisation (21).

5. Dispositif selon la revendication 1,
**caractérisé en ce que** ledit module d'entraînement comprend un chariot d'entraînement (18) entraîné en translation au moyen d'une vis sans fin (22) elle-même entraînée en translation par une motorisation comprenant un stator (23) et un rotor annulaire (24) dont la surface intérieure présente un taraudage dans lequel s'engage la vis.

6. Dispositif selon la revendication 1,
**caractérisé en ce que** lesdits conduits hydrauliques comprennent des moyens de pipetage, une réserve de liquide.

7. Dispositif selon la revendication 1,
**caractérisé en ce que** le plongeur et le palier sont interchangeables de manière à faire varier le diamètre du plongeur et à toujours avoir une gamme de volume assortie d'une précision ad hoc adaptée au volume de liquide à pomper.

8. Dispositif selon la revendication 1,
**caractérisé en ce que** le boîtier (1) comprend une partie amovible pour permettre le changement du plongeur (15) et du palier (16).

9. Dispositif selon la revendication 1,
**caractérisé en ce que** lesdites électrovannes (12, 13) et ladite motorisation (21, 23, 24) sont commandées par un processeur (25) recevant des informations relatives à la position du plongeur (15).

10. Dispositif selon la revendication 9,
**caractérisé en ce que** les susdites informations sont obtenues au moyen d'une fourche optique associée audit module d'entraînement.

11. Dispositif selon la revendication 1,
**caractérisé en ce qu'**il comprend des moyens de commande du module d'entraînement et des électrovannes (12, 13) conçues de manière à assurer un cycle comprenant au moins :
- une phase d'admission dans laquelle la première électrovanne (12) est ouverte, la deuxième électrovanne (13) est fermée et le module d'entraînement engendre une translation du plongeur (15) de manière à accroître le volume de la chambre de travail (17), l'accroissement de volume de la chambre (17) provoquant l'aspiration d'un liquide par exemple dans des moyens de pipetage connectés à un premier canal traversant (6),
- une phase d'échappement dans laquelle, la première électrovanne (12) est fermée, la deuxième électrovanne (13) est ouverte, le module d'entraînement agissant alors de manière à provoquer une réduction du volume de ladite chambre de travail (17) et un refoulement du liquide aspiré à travers un deuxième canal traversant (7).

12. Dispositif selon la revendication 1,
**caractérisé en ce qu'**il comprend en outre des moyens de commande du module d'entraînement et des électrovannes (12, 13) conçus de manière à assurer un fonctionnement en mode de dérivation où les deux électrovannes sont ouvertes.

## Claims

1. A pumping device,
comprising
- a housing (1) whereof the front face (2) is at least partially formed by a block (3) of transparent material which extends partially inside the housing (1), this block (3) being provided with machine-drilled holes including at least one blind hole (4) constituting a work chamber (17), at least one hole constituting an admission and/or exhaust channel (5) which leads into the blind hole (4) at the rear face of the block (3), two through channels (6, 7) each leading onto the front face (8) and the rear face (9) of the block (3), orifices (10, 11) of these two through channels (6, 7) located at the rear face (8) of the block (3) being fitted with hydraulic hose connection means,
- two solenoid valves (12, 13) fixed on the rear face (9) of the block (3), each of these solenoid valves (12, 13) being connected on one hand to the admission and/or exhaust channel (5), and on the other hand to a corresponding one of said through channels (6, 7),
- a plunger (15) sliding leaktightly in a bearing (16) fitted to the orifice of the blind hole (4), this plunger (15) defining, with said blind hole (4), a volume varying according to the axial position of the plunger (15),
- a module for translational driving of the plunger (15) connected to the base of the plunger.

2. The device according to claim 1,
**characterized in that** it comprises two holes constituting an admission channel and an exhaust channel, respectively, which lead into the blind hole at the rear face of the block and are each directly connected to one of said solenoid valves.

3. The device according to claim 1,
**characterized in that** said drive module extends under the block (3) and the solenoid valves (12, 13) and laterally in relation thereto so as to be as compact as possible.

4. The device according to claim 1,
**characterized in that** said drive module comprises a drive carriage (18) connected to the plunger (15) and driven in translation using a control rod (19) meshing with a pinion (20) moved by a motorization (21).

5. The device according to claim 1,
**characterized in that** said drive module comprises a drive carriage (18) driven in translation using a worm screw (22), itself driven in translation by a motorization comprising a stator (23) and an annular rotor (24) whereof the interior surface has a threading in which the screw is engaged.

6. The device according to claim 1,
**characterized in that** said hydraulic hoses comprise pipetting means, a liquid reserve.

7. The device according to claim 1,
**characterized in that** the plunger and the bearing are interchangeable so as to vary the diameter of the plunger and always to have a volume range accompanied by an ad hoc precision adapted to the volume of the liquid to be pumped.

8. The device according to claim 1,
**characterized in that** the housing (1) comprises a removable part to allow changing of the plunger (15) and the bearing (16).

9. The device according to claim 1,
**characterized in that** said solenoid valves (12, 13) and said motorization (21, 23, 24) are controlled by a processor (25) receiving information relative to the position of the plunger (15).

10. The device according to claim 9,
**characterized in that** the aforementioned information is obtained using an optical instrument connected to said drive module.

11. The device according to claim 1,
**characterized in that** it comprises means for controlling the drive module and solenoid valves (12, 13) designed so as to ensure a cycle comprising at least:
- one admission phase in which the first solenoid valve (12) is open, the second solenoid valve (13) is closed and the drive module creates a translation of the plunger (15) so as to increase the volume of the work chamber (17), the increase in the volume of the chamber (17) causing the aspiration of a liquid, for example into pipetting means connected to a first through channel (6),
- one exhaust phase in which the first solenoid valve (12) is closed, the second solenoid valve (13) is open, the drive module then acting so as to cause a reduction of the volume of said work chamber (17) and a discharge of the sucked up liquid through a second through channel (7).

12. The device according to claim 1,
**characterized in that** it also comprises means for controlling the drive module and solenoid valves (12, 13) designed so as to ensure operation in bypass mode where both solenoid valves are open.

## Patentansprüche

1. Pumpvorrichtung, umfassend:
- ein Gehäuse (1), dessen Vorderseite (2) zumindest teilweise aus einem Block (3) aus transparentem Material besteht, der sich teilweise in das Innere des Gehäuses (1) ausdehnt, wobei dieser Block mit Rundbohrungen versehen ist, wovon zumindest eine Blindbohrung (4) eine Arbeitskammer (17) aufbaut, zumindest eine Bohrung (4) einen Zugangs- und/oder Entweichungskanal (5) aufbaut, der auf der Rückseite des Blocks (3) in die Blindbohrung (4) mündet, zwei Querkanäle (6, 7) jeweils an der Vorderseite (8) und der Rückseite (9) des Blocks (3) münden, wobei Öffnungen (10, 11) von diesen beiden Querkanälen (6, 7), die auf der Vorderseite (8) des Blocks (3) liegen, mit Anschlussmitteln von hydraulischen Leitungen ausgestattet sind,
- zwei Elektroventile (12, 13), die auf der Rückseite (9) des Blocks befestigt sind, wobei jedes dieser Elektroventile (12, 13) einerseits mit dem Zugangs- und/oder Entweichungskanal (5) und andererseits mit einem entsprechenden der Querkanäle (6, 7) verbunden ist,
- einen Plunger (15), der gleitend montiert ist, mit einer Dichtigkeit in einem Lager (16), das die öffnung der Blindbohrung (4) ausstattet, wobei dieser Plunger (15) mit der Blindbohrung (4) ein Volumen begrenzt, das in Funktion der axialen Position des Plungers (15) variiert,
- ein Translationsantriebsmodul des Plungers (15), das am Fuße des Plungers angeschlossen ist.

2. Vorrichtung nach Anspruch 1
**dadurch gekennzeichnet, dass** sie zwei Bohrungen umfasst, die jeweils einen Zugangs- und einen Entweichungskanal aufbauen, die auf dem Niveau der Rückseite des Blocks in die Blindbohrung münden und jeweils direkt an eines der Elektroventile angeschlossen sind.

3. Vorrichtung nach Anspruch 1,
**dadurch gekennzeichnet, dass** das Antriebsmodul unter dem Block (3) und den Elektroventilen (12, 13) und seitlich bezüglich dieser letzteren verläuft, derart, um möglichst kompakt zu sein.

4. Vorrichtung nach Anspruch 1,
**dadurch gekennzeichnet, dass** das Antriebsmodul einen Antriebsschlitten (18) umfasst, der mit dem Plunger (15) verbunden ist und mittels einer Zahnstange (19) translatorisch angetrieben wird, die in einen Kolben (20) eingreift, der durch eine Motorisierung (21) bewegt wird.

5. Vorrichtung nach Anspruch 1,
**dadurch gekennzeichnet, dass** das Antriebsmodul einen Antriebsschlitten (18) umfasst, der mittels einer Schraube ohne Ende (22) translatorisch angetrieben wird, die selbst durch eine Motorisierung angetrieben wird, die einen Stator (23) und einen ringförmigen Rotor (24) umfasst, dessen Innenfläche ein Innengewinde aufweist, in das die Schraube eingreift.

6. Vorrichtung nach Anspruch 1,
**dadurch gekennzeichnet, dass** die hydraulischen Leitungen Pipettiermittel, eine Flüssigkeitsreserve, umfassen.

7. Vorrichtung nach Anspruch 1,
**dadurch gekennzeichnet, dass** der Plunger und das Lager so untereinander austauschbar sind, dass man der Durchmesser des Plungers variieren gelassen wird, um immer einen entsprechenden Volumenbereich mit einer ad hoc an das zu pumpende Flüssigkeitsvolumen angepassten Genauigkeit aufzuweisen.

8. Vorrichtung nach Anspruch 1,
**dadurch gekennzeichnet, dass** das Gehäuse (1) einen unbeweglichen Teil umfasst, um die Änderung des Plungers und des Lagers (16) zu ermöglichen.

9. Vorrichtung nach Anspruch 1,
**dadurch gekennzeichnet, dass** die Elektroventile (12, 13) und die Motorisierung (21, 23, 24) von einem Prozessor (25) gesteuert werden, der Informationen relativ zu der Position des Plungers (15) empfängt.

10. Vorrichtung nach Anspruch 9,
**dadurch gekennzeichnet, dass** die oben genannten Informationen mittels einer dem Antriebsmodul beigefügten optischen Gabel erhalten werden.

11. Vorrichtung nach Anspruch 1,
**dadurch gekennzeichnet, dass** es Steuerungsmittel für das Antriebsmodul und die Elektroventile (12, 13) umfasst, die so ausgelegt sind, dass ein Zyklus gewährleistet ist, der mindestens folgendes umfasst:
- eine Zugangsphase, in der das erste Elektroventil (12) geöffnet ist, das zweite Elektroventil (13) geschlossen ist und das Antriebsmodul eine Translation des Plungers (15) auslöst, derart, dass das Volumen der Arbeitskammer (17) zunimmt, wobei die Volumenzunahme der Kammer (17) das Ansaugen einer Flüssigkeit, beispielsweise in Pipettiermittel, die mit einem ersten Querkanal (8) verbunden sind, herbeiführt, eine Entweichungsphase, in der das erste Elektroventil (12) geschlossen ist, das zweite Elektroventil (13) geöffnet ist, wobei das Antriebsmodul nun also so arbeitet, dass eine Reduktion des Volumens der Arbeitskammer (17) und eine Verdrängung der angesaugten Flüssigkeit über einen zweiten Querkanals (7) bewirkt werden.

12. Vorrichtung nach Anspruch 1,
**dadurch gekennzeichnet, dass** sie weiterhin Steuermittel des Antriebsmoduls und der Elektroventile (12, 13) umfasst, die so ausgelegt sind, dass ein Funktionieren im Umleitmodus, wobei die beiden Elektroventile geöffnet sind, sichergestellt ist.
